# FASCICULE DE BREVET EUROPEEN

(11) **EP 4 551 803 B1**
(45) Date de publication et mention de la délivrance du brevet: **15.04.2026**
(21) Numéro de dépôt: 23755447.2
(22) Date de dépôt: 28.06.2023
(51) Int. Cl.: F02C 6/14, F02K 5/00

(54) **PROCÉDÉ DE CONTRÔLE D'UNE TURBOMACHINE HYBRIDE**
VERFAHREN ZUR STEUERUNG EINES HYBRIDTURBINENMOTORS
METHOD FOR CONTROLLING A HYBRID TURBINE ENGINE

(30) Priorité: 05.07.2022 FR 2206865
(43) Date de publication de la demande: 14.05.2025
(73) Titulaire: Safran Electrical & Power, 31702 Blagnac Cedex (FR)
(72) Inventeur: DELBOSC, Philippe, 77550 MOISSY-CRAMAYEL (FR); MICHAUD, Benoît, Lucien, 77550 MOISSY-CRAMAYEL (FR)
(74) Mandataire: Ernest Gutmann - Yves Plasseraud S.A.S.
(86) Numéro de dépôt international: PCT/FR2023/050981
(87) Numéro de publication internationale: WO 2024/009021

(56) Documents cités:
- EP-A1- 1 641 099
- FR-A1- 3 019 215
- FR-A1- 3 019 217

## Description

### Domaine technique de l'invention

Le domaine de l'invention est celui des turbomachines aéronautiques, et en particulier celui des moteurs d'aéronefs réalisés sous la forme de turboréacteurs double corps et double flux. Plus particulièrement, l'invention concerne un procédé de contrôle d'une turbomachine hybride pour aéronef.

### Etat de la technique antérieure

L'hybridation thermique/électrique d'une turbomachine d'aéronef est une voie nouvelle permettant d'améliorer le comportement et les performances de ces turbomachines.

Cette hybridation consiste, au travers de machines électriques installés sur les arbres rotatifs de la turbomachine, à injecter ou prélever de la puissance mécanique à certains moments et à un certain niveau.

Une exigence clé des turbomachines classiques de propulsion d'aéronef est de garantir un temps de montée maximum à ne pas dépasser entre un régime ralenti, dans lequel le moteur n'exerce qu'une poussée faible, et un régime maximum, dans lequel la poussée du moteur est maximale.

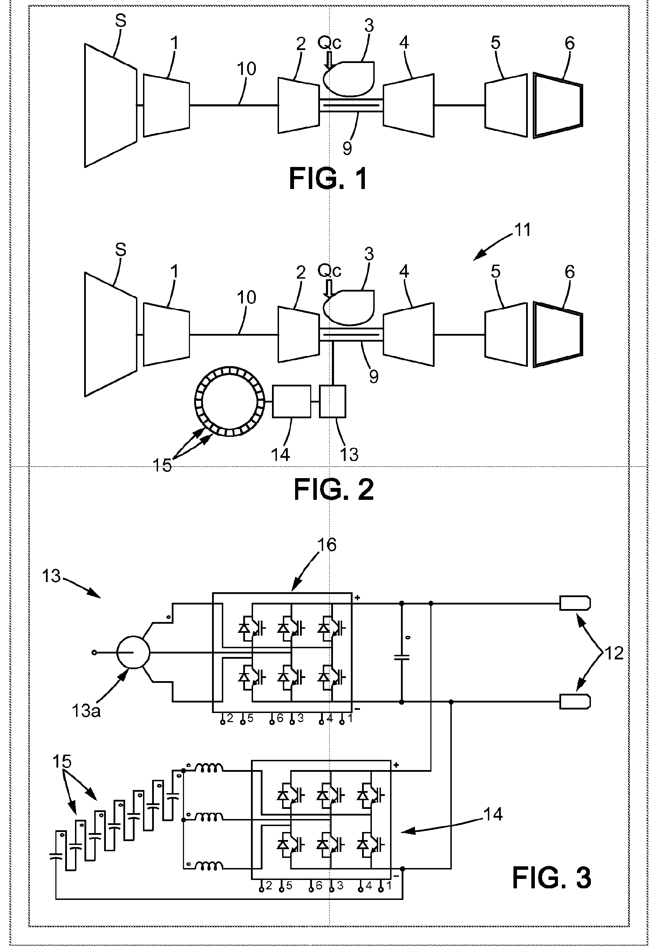

Une turbomachine classique à double corps, double flux, à soufflante, est représentée schématiquement sur la figure 1.

Elle comprend classiquement, d'amont en aval dans le sens de l'écoulement des gaz, une soufflante S, un compresseur basse pression 1, un compresseur haute pression 2, une chambre de combustion 3 qui reçoit un débit de carburant Qc, une turbine haute pression 4, une turbine basse pression 5 et une tuyère primaire d'échappement 6.

Le compresseur basse pression 1 et la turbine basse pression 5 sont reliés par un arbre basse pression 10 et forment ensemble un corps basse pression.

Le compresseur haute pression 2 et la turbine haute pression 4 sont reliés par un arbre haute pression 9 et forment ensemble, avec la chambre de combustion, un corps haute pression.

La soufflante S, qui est entraînée par l'arbre basse pression 10, soit directement, soit par l'intermédiaire d'un réducteur, comprime l'air issu de l'entrée d'air. Cet air se divise en aval de la soufflante S entre un flux d'air secondaire qui est dirigé directement vers une tuyère secondaire (non représentée) par laquelle il est éjecté pour participer à la poussée fournie par la turbomachine, et un flux dit primaire qui pénètre dans le générateur de gaz, constitué par les corps basse et haute pression, puis qui est éjecté dans la tuyère primaire 6.

Classiquement, il est connu d'installer des générateurs électriques dans la turbomachine pour alimenter le réseau électrique de bord. Ces générateurs sont entrainés par l'arbre haute pression 9 au travers d'une boîte d'accessoires afin de convertir l'énergie mécanique en énergie électrique destinée aux systèmes secondaires à bord de l'aéronef.

Une variante peut consister à remplacer au moins un des générateurs électriques par au moins un démarreur afin d'assurer le démarrage de la turbomachine à partir d'énergie électrique. Le démarrage se fait en pilotant le démarreur électrique via un convertisseur situé soit dans la zone moteur, soit dans la zone cabine, s'alimentant par une source externe à la turbomachine à démarrer. Cette source peut être soit un groupe de parc au sol, soit une autre source électrique de bord qui a été préalablement mise en service (générateur auxiliaire de puissance, générateur électrique des autres turbomachines). Une fois la turbomachine démarrée, le démarreur électrique change de mode pour fonctionner exclusivement en générateur électrique.

Cependant, l'emploi d'un tel système pour assister la turbomachine en fournissant une quantité d'énergie électrique importante n'est pas toujours satisfaisant car il nécessite le recours à une source d'énergie électrique de forte capacité située en zone avion et des connexions électriques associées, ce qui génère un encombrement important et des pertes électriques élevées.

Les documents FR 3 019 217 et EP 1 641 099 A1 font partie de l'état de la technique.

### Présentation de l'invention

L'invention vise à remédier à ces inconvénients, en fournissant une méthode d'apport d'énergie à la turbomachine permettant la délivrance rapide d'une grande quantité d'énergie électrique, tout en garantissant une bonne stabilité et durabilité du système.

A cet effet, l'invention a pour objet un procédé de contrôle d'une turbomachine hybride pour aéronef, selon la revendication 1, la turbomachine comprenant un corps basse pression ayant un arbre basse pression et un corps haute pression ayant un arbre haute pression, la turbomachine comprenant également au moins un dispositif de conversion de puissance monté sur l'arbre basse pression ou l'arbre haute pression et un ensemble de stockage d'énergie relié au dispositif de conversion de puissance, l'ensemble de stockage d'énergie comportant une pluralité de composants capacitifs,
le procédé comprenant des étapes de :
- précharge des composants capacitifs jusqu'à ce qu'une tension moyenne aux bornes des composants capacitifs atteigne une première valeur de charge partielle,
- équilibrage des tensions aux bornes de chacun des composants capacitifs,
- charge rapide des composants capacitifs jusqu'à ce que la tension moyenne aux bornes des composants capacitifs atteigne une valeur haute, et
- conversion d'une énergie électrique stockée dans l'ensemble de stockage en énergie mécanique fournie à l'arbre basse pression et/ou à l'arbre haute pression pour assister une manœuvre de l'aéronef.

Un tel procédé permet d'optimiser le fonctionnement des composants capacitifs, en employant au maximum la quantité d'énergie stockée sans dégrader leur durée de vie.

En effet, l'usure des composants capacitifs est principalement liée à la température, qui dans notre cas dépend de l'environnement et est difficilement maitrisable, et de la tension maintenue aux bornes des composants capacitifs. Afin de profiter du maximum d'énergie pour l'assistance de la turbomachine, les composants capacitifs sont chargés jusqu'à leur valeur maximale de tension (classiquement 2,85V) juste avant l'étape de vol requérant l'assistance. La première valeur de charge partielle et la deuxième valeur de charge partielle sont choisies pour que les composants capacitifs puissent être maintenus à de telles valeurs de tension sans vieillissement accéléré ou endommagement notable.

La valeur de haute de tension est sensiblement égale à une tension de charge maximale des composants capacitifs.

L'étape de précharge peut être mise en œuvre lorsque l'aéronef est immobile au sol. L'étape d'équilibrage peut être mise en œuvre lorsque l'aéronef effectue un parcours au sol jusqu'à un emplacement de décollage.

L'étape de charge rapide peut être mise en œuvre pendant un arrêt de l'aéronef pour vérification avant le décollage.

La manœuvre de l'aéronef peut être un décollage.

Alternativement, la manœuvre peut faire correspondre à toute autre phase du vol nécessitant une accélération des arbres de la turbomachine ou une montée rapide en vitesse des arbres de la turbomachine.

Une telle caractéristique permet d'apporter une énergie supplémentaire à la propulsion de l'aéronef au moment le plus critique de l'accélération de l'aéronef.

Le procédé peut comprendre également une étape d'utilisation de l'énergie électrique stockée dans les composants capacitifs pour alimenter des charges de l'aéronef en vol.

Une telle caractéristique permet d'améliorer le fonctionnement des circuits secondaires de l'appareil pendant une phase de vol où l'assistance aux turbomachines n'est pas requise.

Le dispositif de conversion de puissance peut être monté sur l'arbre haute pression et être agencé pour transférer de la puissance uniquement entre l'arbre haute pression et l'ensemble de stockage d'énergie, la turbomachine comprenant également un deuxième dispositif de conversion de puissance monté sur l'arbre basse pression, et agencé pour prélever sur l'arbre basse pression une puissance destinée à alimenter des charges l'aéronef en vol.

Une telle caractéristique permet de réduire le poids et le coût du dispositif de conversion de puissance associé à l'arbre haute pression, celui-ci n'étant responsable que de la charge de l'ensemble de stockage d'énergie.

Cette alimentation par l'arbre basse pression est compatible avec l'amélioration de la qualité du réseau électrique au moyen de l'énergie stockée dans les composants capacitifs.

Le procédé peut comprendre également des étapes de :
- recharge des composants capacitifs jusqu'à ce que la tension moyenne aux bornes des composants capacitifs atteigne une deuxième valeur de charge partielle,
- charge des composants capacitifs jusqu'à ce que la tension moyenne aux bornes des composants capacitifs atteigne la valeur haute, et
- mise en disponibilité de l'énergie électrique stockée dans les composants capacitifs, au cours d'une deuxième manœuvre de l'aéronef, pour assister une éventuelle manœuvre auxiliaire, et
- si la manœuvre auxiliaire n'a pas été mise en œuvre, décharge des composants capacitifs. Une telle caractéristique permet d'assister une éventuelle manœuvre auxiliaire pour laquelle un besoin d'assistance à l'accélération existe.

La deuxième manœuvre de l'aéronef peut être un atterrissage et la manœuvre auxiliaire un redécollage d'urgence.

Une telle caractéristique permet d'assister une manœuvre d'urgence à l'atterrissage de l'aéronef, améliorant la sécurité de l'atterrissage.

L'ensemble de stockage d'énergie peut être configuré pour délivrer une puissance supérieure ou égale à 500 kW pendant une durée comprise entre 0,5 seconde et 2 secondes.

Une telle caractéristique permet de concentrer la puissance auxiliaire à un instant critique de la phase de décollage, par exemple.

L'étape d'équilibrage peut être mise en œuvre au moyen d'un circuit d'équilibrage configuré pour abaisser la tension aux bornes de chaque composant capacitifs jusqu'à une tension seuil après l'étape de précharge.

Une telle caractéristique permet d'éviter l'endommagement de composants capacitifs individuels à cause de tensions non homogènes dans l'ensemble de stockage d'énergie.

Un tel circuit d'équilibrage est par exemple activé au début de l'étape d'équilibrage et désactivé après cette étape d'équilibrage pour permettre l'étape de charge rapide.

La tension seuil peut être modifiée au cours de la mise en œuvre du procédé.

Une telle caractéristique permet de modifier les tensions de charge partielle selon les différents besoins associés aux différentes phases du vol.

Une durée séparant l'étape de charge des composants capacitifs et l'étape de conversion de l'énergie électrique stockée peut être inférieure ou égale à 10 minutes.

Une telle caractéristique permet de limiter le maintien des composants capacitifs à la tension de charge haute et ainsi de réduire leur vieillissement.

### Brève description des figures

La figure 1 est une représentation schématique d'une turbomachine double corps à double flux selon l'état de la technique,
la figure 2 est une représentation schématique d'une turbomachine pour la mise en oeuvre d'un procédé selon l'invention,
la figure 3 est un schéma électrique d'un ensemble de stockage d'énergie de la turbomachine de la figure 2,
la figure 4 est un schéma électrique partiel d'un circuit d'équilibrage de la turbomachine de la figure 2,
les figures 5 à 8 représentent schématiquement un procédé de contrôle de la turbomachine de la figure 2,
les figures 9 et 10 représentent schématiquement un procédé de contrôle de turbomachine hybride selon un deuxième mode de réalisation de l'invention,
les figures 11 et 12 représentent schématiquement un procédé de contrôle de turbomachine hybride selon un troisième mode de réalisation de l'invention.

### Description détaillée de l'invention

La figure 2 représente une turbomachine 11 permettant la mise en oeuvre d'un procédé selon l'invention, installée sur un aéronef. La turbomachine 11, de manière similaire à celle de la figure 1, comprend d'amont en aval dans le sens de l'écoulement des gaz, une soufflante S, un compresseur basse pression 1, un compresseur haute pression 2, une chambre de combustion 3 qui reçoit un débit de carburant Qc, une turbine haute pression 4, une turbine basse pression 5 et une tuyère primaire d'échappement 6.

Le compresseur basse pression 1 et la turbine basse pression 5 sont reliés par un arbre basse pression 10 et forment ensemble un corps basse pression.

Le compresseur haute pression 2 et la turbine haute pression 4 sont reliés par un arbre haute pression 9 et forment ensemble, avec la chambre de combustion 3, un corps haute pression. La soufflante S, qui est entraînée par l'arbre basse pression 10, soit directement, soit par l'intermédiaire d'un réducteur, comprime l'air issu de l'entrée d'air. Cet air se divise en aval de la soufflante S entre un flux d'air secondaire qui est dirigé directement vers une tuyère secondaire (non représentée) par laquelle il est éjecté pour participer à la poussée fournie par la turbomachine, et un flux dit primaire qui pénètre dans le générateur de gaz, constitué par les corps basse et haute pression, puis qui est éjecté dans la tuyère primaire 6.

La turbomachine 11 comprend également un dispositif de conversion de puissance 13 conjugué à l'arbre haute pression 9. Ledit dispositif de conversion de puissance 13 est apte à convertir une puissance électrique en puissance mécanique contribuant à la rotation de l'arbre haute pression 9.

Le dispositif de conversion de puissance 13 est notamment apte à fonctionner alternativement comme un moteur électrique et comme un générateur, selon les phases de vol de l'aéronef, et à prélever une puissance mécanique sur l'arbre haute pression 9 pour la convertir en puissance électrique.

Le dispositif de conversion de puissance 13 est par exemple raccordé à l'arbre haute pression par une boite d'accessoire (non représentée) engrenée sur l'arbre haute pression 9.

La turbomachine 11 comprend également un ensemble de stockage d'énergie électrique, ledit ensemble comprenant un convertisseur de puissance 14 et une pluralité de composants capacitifs 15.

Les composants capacitifs 15 sont notamment des supercondensateurs, par exemple des supercondensateurs à nanotubes de carbone.

Un ordre de grandeur typique d'une assistance au démarrage d'une turbomachine est la fourniture d'une puissance de l'ordre de 500 kW pendant une durée de l'ordre de 1 s, l'énergie totale fournie est donc de l'ordre à 500 kJ. Dans ce cas, le dimensionnement de l'ensemble de stockage à super condensateurs est défini à la fois par la densité de puissance des composants capacitifs et par la densité d'énergie qu'ils stockent.

A ce titre, des super condensateurs réalisés avec des nanotubes de carbone et du graphène permettent accroître la conductivité électrique et ainsi de diviser par 10 (ou plus) la résistivité des composants, ce qui permet au système de stockage d'être adapté à des cycles de fonctionnement de l'ordre de la seconde (au lieu de 10 à 20 secondes pour les super capacités classiques).

L'ensemble de stockage comprend par exemple 296 supers condensateurs à nanotubes de carbone de 900F connectés en série, ce qui permet d'obtenir une résistance série équivalente (ESR) inférieure à 100 µOhms par composant.

Un tel nombre de super condensateurs de telle capacité permet à l'ensemble de stockage d'énergie de stocker et restituer une puissance électrique suffisante pour les besoins mentionnés plus haut.

Cependant, un maintien prolongé de ces super condensateurs à un niveau de charge proche de leur charge maximale est susceptible d'endommager lesdits condensateurs sur la durée, réduisant la durée de bon fonctionnement de l'ensemble de stockage d'énergie.

L'ensemble de stockage d'énergie est représenté de manière schématique sur la figure 3, qui montre l'architecture électrique dudit ensemble. Le dispositif de conversion 13 comprend de manière classique une machine électrique 13a et un onduleur 16, ce dernier étant connecté en parallèle au convertisseur de puissance 14, ici un convertisseur DC/DC, de type hacheur. L'onduleur 16 et le convertisseur 14 sont configurés pour contrôler la puissance prélevée ou injectée sur l'arbre haute pression 9 ou délivrée aux charges 12.

L'ensemble de stockage d'énergie est par exemple également connecté en parallèle aux charges 12 de l'aéronef et peut servir à leur alimentation en énergie électrique.

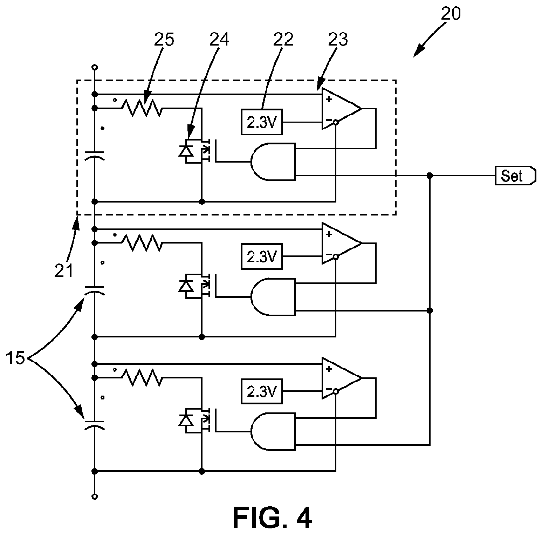

L'ensemble de stockage d'énergie comprend en outre un circuit d'équilibrage 20, représenté en partie à la figure 4, configuré pour rendre les tensions aux bornes des composants capacitifs 15 égales les unes aux autres en dissipant l'énergie stockée excédentaire, chaque composant capacitif 15 ayant ainsi une tension à ses bornes sensiblement égale à une tension moyenne qui dépend de l'énergie totale stockée par le système après la dissipation de l'excédent.

Alternativement, le circuit d'équilibrage 20 peut être configuré pour transférer l'énergie entre les composants capacitifs 15 afin d'équilibrer les tensions à leurs bornes.

En effet, après une première phase de précharge des composants capacitifs, les charges électriques des différents composants capacitifs peuvent varier d'un composant à l'autre, notamment à cause de variation des capacités individuelles des composants ou de décharges partielles spontanées.

Or, l'usure et le vieillissement prématuré des composants capacitifs est directement lié à la tension à leurs bornes, et entraîne généralement une baisse de la capacité du composant. Comme une capacité réduite entraîne une tension plus importante aux bornes du composant à charge égale, on comprend que toute surtension a des effets qui ont tendance à s'amplifier et à entraîner une dégradation accélérée du composant.

L'utilisation du circuit d'équilibrage 20 permet ainsi de préserver les composants capacitifs 15 en imposant une tension homogène aux bornes des différents composants capacitifs 15.

Le circuit d'équilibrage 20 et l'ensemble de stockage définissent une pluralité de cellules 21 comprenant chacune un composant capacitif 15. Chaque cellule 21 est autoalimentée et mesure la tension aux bornes du composant capacitif 15.

Le circuit d'équilibrage 20 comprend une borne de tension de commande isolée Set, qui permet d'activer la commande du circuit d'équilibrage 20 et pilote de manière centralisée l'ensemble du circuit d'équilibrage 20.

L'activation de cette commande déclenche un cycle d'équilibrage décrit ci-dessous.

Si la tension mesurée aux bornes du composant capacitif 15 est supérieure à un seuil 22 (2,3V dans cet exemple), un comparateur 23 commute un transistor 24 de commutation et le composant capacitif 15 se décharge dans la résistance 25, avec une constante de temps RC de plusieurs minutes. Dès que la tension aux bornes du composant capacitif 15 est inférieure ou égale au seuil 22, le transistor 24 n'est plus passant et le composant capacitif 15 cesse sa décharge.

La valeur du seuil 22 est par exemple réglée égale à une valeur dite de charge intermédiaire, à laquelle les composants capacitifs 15 ne subissent pas d'endommagement ou de vieillissement excessif.

Avantageusement, la valeur du seuil 22 peut être modifiée de manière dynamique au cours des différentes phases de vol de l'aéronef.

Ainsi, à la fin de chaque cycle d'équilibrage, tous les composants capacitifs 15 ayant une tension initiale supérieure à celle du seuil 22 sont déchargés jusqu'audit seuil. Il suffit alors de désactiver la commande Set pour ne plus utiliser ce circuit d'équilibrage 20, pour les phases de fonctionnement où les composants capacitifs sont chargés à une valeur plus élevée que la valeur seuil.

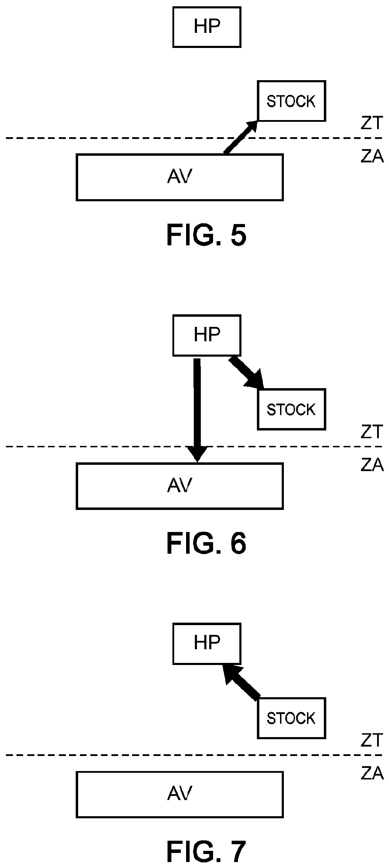

Un procédé de mise en oeuvre de l'ensemble de stockage d'énergie décrit plus haut au cours d'un vol d'un aéronef sur lequel ledit ensemble de stockage est installé est décrit ci-dessous, en références aux figures 5 à 8.

Sur les figures 5 à 8, les flux d'énergie électrique sont représentés schématiquement par des flèches, entre le corps haute pression HP et l'ensemble de stockage STOCK, représentés de manière schématique, dans une zone turbomachine ZT, ainsi que le reste de l'aéronef AV, comprenant les charges et des sources d'énergie embarquées, représenté dans une zone avion ZA.

Ce procédé permet d'optimiser le fonctionnement des composants capacitifs 15, en employant au maximum la quantité d'énergie stockée sans dégrader leur durée de vie.

Le procédé comprend une première étape de précharge des composants capacitifs 15, représentée sur la figure 5, au cours de laquelle une puissance électrique est fournie aux composants capacitifs 15 pour amener la tension moyenne aux bornes desdits composants capacitifs à une première valeur dite de charge partielle.

La tension moyenne aux bornes des composants capacitifs 15 à la fin de l'étape de précharge est par exemple comprise entre 75% et 85% d'une tension de charge maximale desdits composants.

Par exemple, pour des super condensateurs présentant une tension de charge maximale sensiblement égale à 2,85 V, la première tension de charge partielle est sensiblement égale à 2,35 V.

La première tension de charge partielle est choisie de manière à ce que les composants capacitifs 15 subissent une usure réduite lorsque la tension à leurs bornes est maintenue à la première tension de charge partielle par rapport à la tension de charge maximale.

L'étape de précharge est par exemple mise en oeuvre lorsque l'aéronef est en stationnement. Elle peut durer plusieurs minutes, ce qui permet d'employer un courant de charge réduit.

L'énergie nécessaire pour la précharge des composants capacitifs est par exemple issue d'une source située en zone avion, par exemple une source de puissance auxiliaire (ou APU, pour *auxiliary power unit*), ou une source au sol externe à l'aéronef. En effet, la turbomachine ne peut pas encore à ce stade du vol fonctionner comme un générateur.

Le procédé comprend ensuite une étape d'équilibrage des tensions aux bornes de chacun des composants capacitifs 15, mettant en oeuvre le système d'équilibrage décrit plus haut.

Les tensions aux bornes des différents composants capacitifs 15 sont égalisées, de sorte que chacun des composants capacitifs présente à ses bornes une tension sensiblement égale à la valeur de seuil 22 prédéterminée, c'est-à-dire sensiblement égale à la première tension de charge partielle.

Cette étape est par exemple mise en oeuvre pendant le déplacement au sol de l'aéronef de son point de stationnement vers un emplacement de décollage, et peut durer plusieurs minutes.

Le procédé comprend ensuite une étape de charge rapide des composants capacitifs 15, représentée sur la figure 6, jusqu'à ce que la tension moyenne aux bornes des composants capacitifs atteigne une valeur haute.

L'énergie utilisée pour la charge des composants capacitifs est tirée des moteurs en fonctionnement par l'intermédiaire des dispositifs de conversion de puissance 13.

Ladite valeur haute est par exemple comprise entre 95% et 100% d'une tension de charge maximale des composants capacitifs.

La tension haute est par exemple sensiblement égale à 2,85 V en moyenne pour chaque super condensateur, pour une tension totale de 843 V. Un courant de l'ordre de 10 A permet de passer de la valeur de charge partielle à la valeur de charge maximale en environ une minute. L'étape de charge rapide des composants capacitifs est par exemple mise en oeuvre après le démarrage des moteurs, pendant les quelques minutes nécessaires aux vérifications avant le décollage. Le circuit d'équilibrage est préalablement désactivé pour pouvoir charger les composants capacitifs.

La charge maximale des composants capacitifs 15 juste avant le décollage permet de bénéficier d'une assistance maximale pour le décollage sans maintenir ces composants à un niveau de charge maximale de manière prolongée.

Lors de l'étape de charge rapide, les moteurs de l'aéronef sont allumés et fonctionnent comme générateurs. Ce sont donc eux qui fournissent l'énergie pour charger les composants capacitifs 15 à leur charge maximale, à travers le dispositif de conversion de puissance 13. Le procédé comprend ensuite une étape de conversion de l'énergie électrique stockée dans l'ensemble de stockage en énergie mécanique fournie à l'arbre haute pression pour assister le décollage de l'aéronef, comme représenté sur la figure 7.

L'énergie stockée est restituée pendant une durée de l'ordre de 1,5s, ce qui permet de concentrer l'assistance au moment critique nécessitant le plus d'accélération.

Cette conversion entraine une décharge partielle ou totale des composants capacitifs 15.

Avantageusement, la durée séparant la charge rapide des composants capacitifs jusqu'à atteindre la tension haute et la décharge par conversion de l'énergie électrique stockée en énergie mécanique pour l'assistance au décollage est inférieure ou égale à 10 minutes, et préférentiellement inférieure ou égale à 5 minutes.

Le procédé peut comprendre une étape ultérieure de recharge des composants capacitifs en utilisant la turbomachine comme un générateur électrique et en prélevant la puissance sur l'arbre haute pression 9 à travers le dispositif de conversion 13, identique à celle représentée sur la figure 6.

Les composants capacitifs 15 sont rechargés jusqu'à avoir une tension moyenne aux bornes desdits composants capacitifs sensiblement égale à une deuxième valeur de charge partielle. La deuxième valeur de charge partielle peut être égale à la première valeur de charge partielle ou légèrement différente, tout en restant dans la même plage de tension et en présentant les caractéristiques et avantages décrits plus hauts.

Par exemple, pour des super condensateurs présentant une tension maximale sensiblement égale à 2,85 V, la deuxième tension de charge partielle est sensiblement égale à 2,2 V, ce qui permet de ne pas user les super condensateurs.

La tension totale aux bornes de l'ensemble de stockage d'énergie est alors par exemple sensiblement égale à 650 V.

Une fois les capacités chargées, la recharge est stoppée et l'énergie prélevée sur l'arbre haute pression sert uniquement à alimenter les charges avion. En cas de délestage, si la consommation des charges devient temporairement trop faible par rapport à la puissance prélevée, le surplus de puissance est temporairement stocké dans le système de stockage pour limiter les surtensions le temps d'adapter la puissance prélevée.

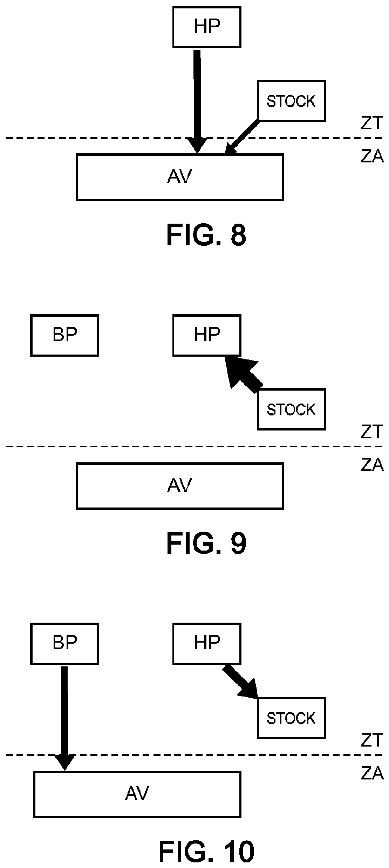

Avantageusement, au cours du vol, l'ensemble de stockage d'énergie est utilisé pour améliorer la qualité du réseau électrique de l'aéronef en suppléant à l'énergie prélevée de manière standard sur l'arbre haute pression 9, comme représenté sur la figure 8.

L'énergie stockée dans l'ensemble de stockage d'énergie est utilisée pour alimenter les charges 12 de l'aéronef de manière ponctuelle, pour pallier un défaut temporaire de l'alimentation principale et/ou une demande ponctuelle trop élevée. La recharge des composants capacitifs est temporairement stoppée pendant cet apport d'énergie d'appoint. Cette étape peut être mise en oeuvre de manière alternée avec la recharge des composants capacitifs 15, représentée sur la figure 6, les apports d'énergie étant ponctuels et peu fréquents.

En effet, l'ensemble de stockage et le convertisseur de puissance 14 sont dimensionnés pour fournir une très forte puissance (500 kW dans l'exemple décrit) pendant une durée de l'ordre d'une seconde. Ils peuvent donc facilement assister la génératrice ainsi que sa régulation en cas de fort appel de courant, de transitoire, de court-circuit sur le réseau, ou de délestage et ainsi éviter les creux de tensions et les surtensions sur le réseau électrique de l'aéronef.

Le procédé peut ensuite comprendre une étape de charge maximale des composants capacitifs mise en oeuvre pendant la descente de l'aéronef, au cours de laquelle la tension aux bornes des composants capacitifs est élevée jusqu'à une tension moyenne sensiblement égale à la tension de charge maximale.

Cette charge est maintenue disponible en fin de descente de l'aéronef, pendant la phase d'atterrissage pour assister une éventuelle manoeuvre d'urgence, telle qu'un redécollage d'urgence.

Après l'atterrissage, le procédé comprend une étape de décharge des composants capacitifs 15 pour préserver ces composants. L'énergie stockée peut avantageusement être utilisée pendant la phase de déplacement au sol de l'aéronef jusqu'à son lieu de stationnement, pour économiser les autres sources d'énergie.

Selon une variante (non-représentée), le dispositif de conversion 13 est configuré pour fonctionner avec un courant alternatif (AC) distribué aux charges 12 de l'aéronef. Le dispositif de conversion 13 est alors par exemple une génératrice à trois étages.

Le convertisseur 14 est alors remplacé par un convertisseur AC/DC en entrée de l'ensemble de stockage d'énergie électrique, permettant de réguler la tension d'entrée du réseau DC constitué par l'ensemble de stockage. Ledit convertisseur 14 comprend par exemple un filtre de type LC ou LCL.

Selon un autre mode de réalisation, représenté sur les figures 9 et 10, la turbomachine 11 comprend un premier dispositif de conversion 13 associé à l'arbre haute pression 9, dans le corps haute pression HP, et un deuxième dispositif de conversion associé à l'arbre basse pression 10, dans le corps basse pression BP, tous deux reliés à l'ensemble de stockage d'énergie STOCK, en zone turbomachine ZT.

Un tel agencement offre des options supplémentaires pour le procédé de contrôle de la turbomachine 11 et de l'ensemble de stockage d'énergie.

Dans une telle configuration, le premier dispositif de conversion 13 n'est typiquement pas dimensionné pour alimenter les charges 12, mais seulement pour la charge de l'ensemble de stockage d'énergie et l'assistance à l'accélération. Ce dimensionnement limité à des utilisations ponctuelles permet de réduire la masse du dispositif.

L'étape de précharge, l'étape d'équilibrage des tensions et l'étape de charge à une tension maximale des composants capacitifs 15 sont sensiblement inchangées dans ce mode de réalisation. L'ensemble de stockage d'énergie est chargé par une source externe, la turbomachine ne pouvant pas fonctionner comme un générateur d'énergie avant le décollage. L'assistance au décollage est également inchangée, avec la puissance électrique stockée convertie en puissance mécanique fournie au corps haute pression HP par le premier dispositif de conversion 13, comme représenté sur la figure 9.

Au cours du vol, comme représenté sur la figure 10, l'alimentation des charges 12 de l'aéronef est assurée par le corps basse pression BP, tandis que la recharge de l'ensemble de stockage STOCK est dévolue au corps haute pression HP.

Ainsi, lorsque la turbomachine 11 fonctionne en générateur électrique, le premier dispositif de conversion 13 charge les composants capacitifs 15 et les maintient au niveau de charge désiré, comme expliqué précédemment, tandis que le deuxième dispositif de conversion alimente les charges 12.

Lors d'un besoin d'assistance à l'accélération, l'énergie stockée dans l'ensemble de stockage est restituée à l'arbre haute pression 9 par le premier dispositif de conversion 13, tandis que le deuxième dispositif de conversion continue d'alimenter les charges 12, sans impact sur la sollicitation de l'arbre haute pression 9 et sans ralentissement.

A la fin de cette assistance, le corps HP reprend son rôle de recharge de l'ensemble de stockage STOCK jusqu'à l'atterrissage et la décharge finale des composants capacitifs.

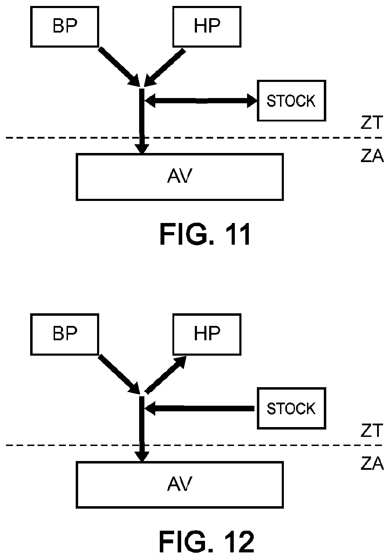

Dans un autre mode de réalisation, représenté aux figures 11 et 12, qui couvre le cas d'un réseau entièrement de type DC, les deux dispositifs de conversion de puissance peuvent être agencés électriquement en parallèle, les corps haute pression HP et basse pression BP alimentant en parallèle les charges de l'aéronef AV et l'ensemble de stockage STOCK.

Les étapes de précharge, équilibrage, charge maximale et assistance au décollage restent sensiblement inchangées par rapport à ce qui est décrit dans le mode de réalisation précédent. Après le décollage, lorsque la turbomachine peut fonctionner en mode générateur, les ensembles haute pression HP et basse pression BP alimentent en parallèle les charges de l'aéronef AV, comme représenté sur la figure 11. De plus, en fonction des besoins, l'ensemble de stockage STOCK est rechargé par les ensembles haute pression HP et basse pression HP en parallèle, ou bien fournit un apport de puissance ponctuel aux charges de l'aéronef AV pour stabiliser le réseau.

En cas de besoin d'assistance à la propulsion, comme représenté sur la figure 12, l'ensemble basse pression BP continue l'alimentation des charges de l'aéronef AV, avec un apport supplémentaire de l'ensemble de stockage d'énergie si nécessaire. L'ensemble HP bénéficie du reste de l'énergie stockée dans l'ensemble de stockage, comme décrit plus haut.

Le rôle de stabilisation du réseau est donc maintenu dans ce mode de réalisation pour l'ensemble de stockage d'énergie STOCK, et on évite une surcharge de l'ensemble basse pression BP et un ralentissement associé, grâce à cet appoint, lorsque l'ensemble HP passe en mode d'assistance électrique.

## Revendications

1. Procédé de contrôle d'une turbomachine (11) hybride pour aéronef, la turbomachine (11) comprenant un corps basse pression ayant un arbre basse pression (10) et un corps haute pression ayant un arbre haute pression (9), la turbomachine (11) comprenant également au moins un dispositif de conversion de puissance (13) monté sur l'arbre basse pression (10) ou l'arbre haute pression (9) et un ensemble de stockage d'énergie relié au dispositif de conversion de puissance (13), l'ensemble de stockage d'énergie comportant une pluralité de composants capacitifs (15),
le procédé comprenant des étapes de :
- précharge des composants capacitifs (15) jusqu'à ce qu'une tension moyenne aux bornes des composants capacitifs (15) atteigne une première valeur de charge partielle,
- équilibrage des tensions aux bornes de chacun des composants capacitifs (15),
- charge rapide des composants capacitifs (15) jusqu'à ce que la tension moyenne aux bornes des composants capacitifs (15) atteigne une valeur haute, et
- conversion d'une énergie électrique stockée dans l'ensemble de stockage en énergie mécanique fournie à l'arbre basse pression (10) et/ou à l'arbre haute pression (9) pour assister une manoeuvre de l'aéronef.

2. Procédé selon la revendication précédente, dans lequel la manoeuvre de l'aéronef est un décollage.

3. Procédé selon l'une des revendications précédentes, comprenant également une étape d'utilisation de l'énergie électrique stockée dans les composants capacitifs (15) pour améliorer une qualité d'un réseau électrique de l'aéronef en vol.

4. Procédé selon l'une des revendications 1 à 3, dans lequel le dispositif de conversion de puissance (13) est monté sur l'arbre haute pression (9) et est agencé pour transférer de la puissance uniquement entre l'arbre haute pression (9) et l'ensemble de stockage d'énergie, la turbomachine (11) comprenant également un deuxième dispositif de conversion de puissance monté sur l'arbre basse pression (10), et agencé pour prélever sur l'arbre basse pression (10) une puissance destinée à alimenter des charges (12) de l'aéronef en vol.

5. Procédé selon l'une des revendications précédentes, dans lequel le procédé comprend également des étapes de :
- recharge des composants capacitifs (15) jusqu'à ce que la tension moyenne aux bornes des composants capacitifs (15) atteigne une deuxième valeur de charge partielle,
- charge des composants capacitifs (15) jusqu'à ce que la tension moyenne aux bornes des composants capacitifs atteigne la valeur haute, et
- mise en disponibilité de l'énergie électrique stockée dans les composants capacitifs (15), au cours d'une deuxième manœuvre de l'aéronef, pour assister une éventuelle manœuvre auxiliaire, et
- si la manœuvre auxiliaire n'a pas été mise en œuvre, décharge des composants capacitifs (15).

6. Procédé selon la revendication précédente, dans lequel la deuxième manœuvre de l'aéronef est un atterrissage et la manœuvre auxiliaire est un redécollage d'urgence.

7. Procédé selon l'une des revendications précédentes, dans lequel l'ensemble de stockage d'énergie est configuré pour délivrer une puissance supérieure ou égale à 500 kW pendant une durée comprise entre 0,5 seconde et 2 secondes.

8. Procédé selon l'une des revendications précédentes, dans lequel l'étape d'équilibrage est mise en œuvre au moyen d'un circuit d'équilibrage (20) configuré pour abaisser la tension aux bornes de chaque composant capacitif (15) jusqu'à une tension de seuil (22) après l'étape de précharge.

9. Procédé selon la revendication précédente, dans lequel la tension de seuil (22) peut être modifiée au cours de la mise en œuvre du procédé.

10. Procédé selon l'une des revendications précédentes, dans lequel une durée séparant l'étape de charge rapide des composant capacitifs (15) et l'étape de conversion de l'énergie électrique stockée est inférieure ou égale à 10 minutes.

## Patentansprüche

1. Verfahren zur Steuerung eines Hybrid-Triebwerks (11) für Luftfahrzeuge, wobei das Triebwerk (11) ein Niederdruckgehäuse mit einer Niederdruckwelle (10) und ein Hochdruckgehäuse mit einer Hochdruckwelle (9) umfasst, wobei das Triebwerk (11) ferner zumindest eine Leistungsumwandlungseinrichtung (13) umfasst, die an der Niederdruckwelle (10) oder der Hochdruckwelle (9) gelagert ist, sowie einen mit der Leistungsumwandlungseinrichtung (13) verbundenen Energiespeicher, wobei der Energiespeicher mehrere kapazitive Bauteile (15) aufweist,
wobei das Verfahren die folgenden Schritte umfasst:
- Vorladen der kapazitiven Bauteile (15), bis eine mittlere Spannung an den Anschlüssen der kapazitiven Bauteile (15) einen ersten Teilladewert erreicht,
- Ausgleichen der Spannungen an den Anschlüssen der jeweiligen kapazitiven Bauteile (15),
- Schnellladen der kapazitiven Bauteile (15), bis eine mittlere Spannung an den Anschlüssen der kapazitiven Bauteile (15) einen Höchstwert erreicht, und
- Umwandeln von im Energiespeicher gespeicherter elektrischer Energie in mechanische Energie, die der Niederdruckwelle (10) und/oder der Hochdruckwelle (9) zugeführt wird, um ein Flugmanöver des Luftfahrzeugs zu unterstützen.

2. Verfahren nach dem vorhergehenden Anspruch,
wobei es sich bei dem Flugmanöver des Luftfahrzeugs um einen Start handelt.

3. Verfahren nach einem der vorhergehenden Ansprüche,
ferner umfassend einen Schritt des Verwendens von in den kapazitiven Bauteilen (15) gespeicherter elektrischer Energie zur Verbesserung der Qualität des Bordnetzes des Luftfahrzeugs im Flug.

4. Verfahren nach einem der Ansprüche 1 bis 3,
wobei die Leistungsumwandlungseinrichtung (13) an der Hochdruckwelle (9) gelagert und dazu ausgelegt ist, die Leistung nur zwischen der Hochdruckwelle (9) und dem Energiespeicher zu übertragen, wobei das Triebwerk (11) ferner eine zweite Leistungsumwandlungseinrichtung umfasst, die an der Niederdruckwelle (10) gelagert und dazu ausgelegt ist, an der Niederdruckwelle (10) eine Leistung zum Speisen der Verbraucher (12) des Luftfahrzeugs im Flug zu entnehmen.

5. Verfahren nach einem der vorhergehenden Ansprüche,
wobei das Verfahren ferner die folgenden Schritte umfasst:
- Wiederaufladen der kapazitiven Bauteile (15), bis die mittlere Spannung an den Anschlüssen der kapazitiven Bauteile (15) einen zweiten Teilladewert erreicht,
- Aufladen der kapazitiven Bauteile (15), bis die mittlere Spannung an den Anschlüssen der kapazitiven Bauteile den Höchstwert erreicht,
- Bereitstellen der in den kapazitiven Bauteilen (15) gespeicherten elektrischen Energie während eines zweiten Flugmanövers des Luftfahrzeugs zur Unterstützung eines möglichen Hilfsmanövers,
- Entladen der kapazitiven Bauteile (15), falls das Hilfsmanöver nicht durchgeführt wurde.

6. Verfahren nach dem vorhergehenden Anspruch,
wobei es sich bei dem zweiten Flugmanöver des Luftfahrzeugs um eine Landung handelt und bei dem Hilfsmanöver um einen Notstart.

7. Verfahren nach einem der vorhergehenden Ansprüche,
wobei der Energiespeicher dazu ausgelegt ist, eine Leistung von über oder gleich 500 kW für eine Zeitspanne zwischen 0,5 Sekunden und 2 Sekunden abzugeben.

8. Verfahren nach einem der vorhergehenden Ansprüche,
wobei der Schritt des Ausgleichens mittels einer Ausgleichsschaltung (20) durchgeführt wird, die dazu ausgelegt ist, die Spannung an den Anschlüssen des jeweiligen kapazitiven Bauteils (15) nach dem Schritt des Vorladens auf eine Schwellenspannung (22) zu reduzieren.

9. Verfahren nach einem der vorhergehenden Ansprüche,
wobei die Schwellenspannung (22) während der Durchführung des Verfahrens abgeändert werden kann.

10. Verfahren nach einem der vorhergehenden Ansprüche,
wobei eine Zeitspanne zwischen dem Schritt des Schnellladens der kapazitiven Bauteile (15) und dem Schritt des Umwandelns der gespeicherten elektrischen Energie weniger als oder gleich 10 Minuten beträgt.

## Claims

1. Method for controlling a hybrid turbine engine (11) for an aircraft, the turbine engine (11) comprising a low-pressure body having a low-pressure shaft (10) and a high-pressure body having a high-pressure shaft (9), the turbine engine (11) also comprising at least one power conversion device (13) mounted on the low-pressure shaft (10) or high-pressure shaft (9) and an energy storage assembly connected to the power conversion device (13), the energy storage assembly comprising a plurality of capacitive components (15),
the method comprising steps of:
- precharging the capacitive components (15) until a mean voltage across the capacitive components (15) reaches a first partial charge value,
- balancing the voltages across each of the capacitive components (15),
- rapidly charging the capacitive components (15) until the mean voltage across the capacitive components (15) reaches a high value, and
- converting electrical energy stored in the storage assembly into mechanical energy delivered to the low-pressure shaft (10) and/or to the high-pressure shaft (9) in order to assist with a maneuver of the aircraft.

2. Method according to the preceding claim, wherein the maneuver of the aircraft is a takeoff.

3. Method according to one of the preceding claims, also comprising a step of using the electrical energy stored in the capacitive components (15) to improve a service quality of an electrical network of the aircraft during flight.

4. Method according to one of claims 1 to 3, wherein the power conversion device (13) is mounted on the high-pressure shaft (9) and is arranged to transfer power only between the high-pressure shaft (9) and the energy storage assembly, the turbine engine (11) also comprising a second power conversion device mounted on the low-pressure shaft (10) and arranged to draw power from the low-pressure shaft (10) so as to power loads (12) of the aircraft during flight.

5. Method according to one of the preceding claims, wherein the method also comprises steps of:
- recharging the capacitive components (15) until the mean voltage across the capacitive components (15) reaches a second partial charge value,
- charging the capacitive components (15) until the mean voltage across the capacitive components reaches the high value, and
- making available the electrical energy stored in the capacitive components (15), during a second maneuver of the aircraft, in order to assist with a possible auxiliary maneuver, and
- if the auxiliary maneuver was not implemented, discharging the capacitive components (15).

6. Method according to the preceding claim, wherein the second maneuver of the aircraft is a landing and the auxiliary maneuver is an emergency takeoff.

7. Method according to one of the preceding claims, wherein the energy storage assembly is configured to deliver a power greater than or equal to 500 kW for a duration of between 0.5 seconds and 2 seconds.

8. Method according to one of the preceding claims, wherein the balancing step is implemented by means of a balancing circuit (20) configured to lower the voltage across each capacitive component (15) to a threshold voltage (22) after the precharging step.

9. Method according to the preceding claim, wherein the threshold voltage (22) may be modified during implementation of the method.

10. Method according to one of the preceding claims, wherein the length of time separating the step of rapidly charging the capacitive components (15) and the step of converting the stored electrical energy is less than or equal to 10 minutes.
